# EUROPEAN PATENT SPECIFICATION

(11) **EP 3 700 253 B1**
(45) Date of publication and mention of the grant of the patent: **05.05.2021**
(21) Application number: 19161894.1
(22) Date of filing: 11.03.2019
(51) Int. Cl.: H04W 24/02, H04W 24/04, H04W 16/18, H04W 24/08

(54) **PREDICTING GEOGRAPHICAL DISTRIBUTION OF MOBILE COMMUNICATION NETWORK QUALITY**
VORHERSAGE DER GEOGRAFISCHEN VERTEILUNG DER MOBILKOMMUNIKATIONSNETZQUALITÄT
PRÉDICTION DE LA DISTRIBUTION GÉOGRAPHIQUE DE LA QUALITÉ D'UN RÉSEAU DE COMMUNICATION MOBILE

(30) Priority: 25.02.2019 DE 102019104746
(43) Date of publication of application: 26.08.2020
(73) Proprietor: umlaut communications GmbH, 52070 Aachen (DE)
(72) Inventor: Riihijärvi, Janne Pekka, 52062 Aachen (DE)
(74) Representative: Michalski Hüttermann & Partner Patentanwälte mbB

(56) References cited:
- EP-A2- 1 154 661
- EP-A2- 1 175 115
- US-A1- 2017 086 084
- US-B1- 8 903 995

## Description

### FIELD OF INVENTION

The invention relates to a computer implemented method for predicting geographical distribution of a mobile communication network quality, comprising the step of preprocessing measurements of the mobile communication network quality of a geographical area of interest.

### BACKGROUND

With respect to quality assurance and optimization of mobile radio networks it is known from prior art to repeatedly establish voice and data connections from a mobile phone to different destinations in order to draw conclusions regarding the quality of the utilized mobile radio network, for example, on the basis of measured call set-up time or speed of an Internet connection. Mobile phones which can be acquired by end users are utilized in order to design the measurements to be most realistic. In so-called "drive tests" the mobile phones are disposed within a measuring vehicle and are provided with external antennas disposed outside the measuring vehicle, in order to create preferably comparable conditions for different network operators. Repeated, automatic measurements are carried out along a predetermined driving route for generating measurement data, which are then analyzed in order to determine mobile communication network quality.

While such drive- or walk-tests are still suitable and widely used tools for determining mobile radio network quality, drive-tests are rather costly and allow gathering measurement information only during the actual drive-tests and only along the often pre-defined route. Such way applications for smartphones have been developed which during normal use of the smartphone collect information in respect to the quality of the used mobile radio network. However, such applications are not yet widely used and thus only allow limited geographical prediction of mobile radio network quality at locations where no measurement information is available

Documents EP1175115 A2 and US2017/086084 disclose related background.

### SUMMARY OF SOME EMBODIMENTS OF THE INVENTION

It is therefore an object of the invention to provide an improved method for determining radio network quality at locations where no measurement information from drive-tests, walk-test, measurement applications etc. is available.

The object is solved by the features of the independent claim. Preferred embodiments are described by the features of the dependent claims.

Thus, the object is solved by a computer implemented method predicting geographical distribution of a mobile communication network quality, comprising the steps:
Selecting a kriging propagation prediction algorithm selected from fixed rank kriging, regression kriging, cokriging and indicator kriging based on mobile communication network configuration information and type and/or quantity of measurements of the mobile communication network quality of a geographical area of interest;
Preprocessing measurements of the mobile communication network quality of the geographical area of interest based on the selected kriging propagation prediction algorithm,
Applying the selected kriging propagation prediction algorithm to the preprocessed measurements based on the mobile communication network configuration information and/or propagation characteristics of the geographical area of interest for predicting the mobile communication network quality at locations within the geographical area of interest where measurements are not available, and
Postprocessing the predicted mobile communication network quality based on the selected kriging propagation prediction algorithm for obtaining a mobile communication network signal strength characteristic of the area of interest.

It is thereby an essential point to use a kriging propagation algorithm, which is selected beforehand depending on the mobile communication network configuration information and type and/or quantity of measurements of the mobile communication network quality, for providing a prediction of the mobile communication network quality at locations within the geographical area of interest where measurements are not available. Kriging, also referred to as Gaussian process regression or Wiener-Kolmogorov prediction, is a method of interpolation for which the interpolated values are modeled by a Gaussian process governed by prior covariates, namely the mobile communication network configuration information and/or propagation characteristics of the geographical area of interest. Kriging advantageously gives best linear unbiased prediction of the intermediate measurements of the mobile communication network quality, and thereby much better results as, for example, smoothing splines or comparable methods known from prior art.

The actual kringing propagation prediction algorithm is selected within the first step from fixed rank kriging, regression kriging, cokriging and indicator kriging, depending based on mobile communication network configuration information and type and/or quantity of measurements of the mobile communication network quality of a geographical area of interest. The preprocessing and postprocessing also depends on the selected kriging propagation prediction algorithm. The mobile communication network configuration information preferably comprises, among others, information about base station locations, antenna configuration, antenna tilt, types of antennas etc. in the area of interest. The area of interest is preferably a limited geographical area being defined, for example, by a number of antennas, a geographical district etc. The type of measurements of the mobile communication network quality of the geographical area of interest preferably comprise drive-test data, i.e. measurement data derived from a drive-test, walk-test measurement data derived from a walk-test, crowd sourced data and/or mobile scanner data. Crowd sourced data is preferably derived from a plurality of applications installed on smartphones, whereby the applications, for example during mobile phone calls carried out with the respective smartphone, collect data about the mobile communication network quality such as signal strength, call establishment time etc. The data is then transferred from the smartphone to a server, and then possibly further analyzed and stored as crowd data. The quantity of measurements may comprise a threshold such that measurement data is only considered if in a given area of interest if sufficient measurement data is available.

The proposed method can be advantageously used for coverage analysis of a single operator and radio access technology, RAT, such as 2G to 5G cellular, Wi-Fi etc., for identification of coverage holes for a particular RAT of a given operator, for configuration optimization of a radio access network by tuning parameters such as transmit powers, frequencies, and antenna configurations of the constituent base stations, or for competition analysis such as, for example identification of geographical regions where the coverage of a given operator is either better or worse than the competing operators. Furthermore, the proposed method can be advantageously used for planning of technology roll-out for RAT X, for example 5G mm-wave, using measurements from RAT Y, for example 4G, by correcting coverage predictions for the latter using models accounting changes in frequency, bandwidth, and the effects of the environment to the physical layers involved. Same techniques can be applied to technology upgrades, such as introduction of 256/1024-QAM or massive MIMO into an existing network.

The proposed method can be further advantageously used for identification of geographical regions with unexpected interference, for identification of geographical regions with worse than expected performance in terms of alternative wireless communications KPIs, such as end-to-end throughput, packet error rate, or call setup failure rate, or for identification of directions of strong and weak signals in directional antenna deployments. Furthermore, the proposed method can be advantageously used for estimation of channel blocking rates over a geographical region for highly directional communication systems, such as mm-wave 5G deployments or visible light communications, for automatic derivation of data sets such as vehicular and pedestrian mobility patterns, topography data or building clutter for network simulation and planning directly from crowd sourced measurements, for estimation of user or traffic densities over a geographical region of interest to be used for network planning, traffic management, etc., for validation and calibration of crowd data based predictions using drive test data, or verifying that results from a dedicated test drive are compatible with the large-scale picture obtained from crowd data and/or historical test drives (and not suffering from misconfiguration, equipment failures, or other such sources of errors), and/or for application profiling for crowd data for identifying location and time specific application usage patterns.

In a particular preferred implementation fixed rank kriging is selected if larger amount of measurements and only one type of measurements selected from drive- or walk test measurement data, crowd sourced measurement data from smartphones or mobile scanner data is available, regression kriging is selected based on the mobile communication network configuration information and if only one type of measurements is available, cokriging is selected if multiple type of measurements are available and indicator kriging is selected otherwise. Such selection has been proven very advantageous. In particular, fixed rank kriging is advantageous for network communication network wide predictions with limited additional information, regression kriging is advantageously used for precise predictions in small regions of interest, cokriging is advantageously used when multiple sources of measurements with different characteristics are available, as in case of drive tests and crowd data being used simultaneously, and indicator kriging is advantageously used for predicting probabilities, such as loss rates, call failure rates etc. A larger amount of measurements means preferably more than 5.000, 10.000, 20.000 or 50.000 measurements, in particular within the area of interest.

In another preferred implementation the preprocessing comprises removing invalid measurements collected by malfunctioning mobile devices and/or comprising imprecise or incorrect GPS readings and/or collected inside buildings and/or inside planes, by using statistical models, resolving contradicting measurements at a single location and/or based on metadata associated to the measurements, and/or the measurements are averaged and/or aggregated. Preprocessing preferably means that, depending on the chosen kriging algorithm, measurement data is first sanitized to remove measurements collected for example by malfunctioning devices, or which are determined to be too imprecise for next processing steps, possibly because GPS readings as metadata are incorrect and thus filtered out. Then the remaining data can be further reduced to select measurements that are relevant to the chosen kriging algorithm. For example, to determine outdoor coverage of a wireless network, measurements collected indoors or by passengers inside planes are removed. This can done by using statistical models in case of crowd sourced measurement data, or metadata associated to the measurements, for example for drive-test measurement data, comprising GPS readings, time stamps etc. Furthermore, filtering can be applied to reduce measurement error, for example averaged to remove fast fading effects, or aggregated to obtain signal of interest when applying the selected kriging propagation algorithm. For example, in case of Wi-Fi coverage estimation, a peak hold filter can be used to find received power from beacon frames in absence of ongoing data transmission.

In a further preferred implementation, the mobile communication network configuration information comprises antenna patterns and/or base station configurations. The mobile communication network configuration information may further comprise antenna tilt, antenna output power or other technical parameter of the mobile communication network within the area of interest.

In another preferred implementation propagation characteristics of the geographical area comprise base station locations, terrain information, land use data, clatter data, terrain roughness, elevation, terrain elevation and/or building locations, in particular within the area of interest. In a further preferred implementation, the measurements of the mobile communication network quality comprise data derived from a drive-test, a walk-test data and/or mobile device applications as crowd sourced data.

In another preferred implementation the kriging propagation prediction algorithm determines a granularity of the predicted mobile communication network quality based on a type of the geographical area of interest. Such embodiment advantageously allows tuning the desired prediction locations to the chosen use case for achieving substantial savings in the needed computational costs. For example, higher resolution predictions can be made within urban areas as area of interest where radio propagation is more unpredictable, and data is abundant, while using lower resolution in low-population regions as area of interest.

In a further preferred implementation postprocessing comprises generating a network operator and/or radio access technology specific strength signal map. Such strength signal map can be used for optimizing the mobile communication network, for example by adjusting antenna output, tilt and/or further antenna setting. In another preferred embodiment postprocessing comprises automatically optimizing the mobile communication network in the area of interest according to the obtained mobile communication network signal strength characteristic. Such optimizing may be automatically repeated every day, every week or every month. Such way a constant optimization of the mobile communication network can be achieved.

In another preferred implementation postprocessing comprises identifying coverage holes for combining measurements from multiple radio access technologies. For example, measurements from multiple radio access technologies are combined to identify regions not served by a given, for example 3G or 4G, technology. Thereby, measurements from radio access networks that are not prioritized by the user equipment connection management can be used as evidence of a coverage hole of the preferred technology within the area of interest. Such user equipment preferably comprises a smartphone.

In a further preferred implementation postprocessing comprises identifying regions and/or communication quality of different mobile communication network operators. With such an embodiment a geographic region can be identified in which a given operator is at competitive disadvantage, for example because the given operator does not cover a specific region with preferred networking technology whereas at least one competitor does, or has a competitive advantage, for example because the given operator covers a region with preferred technology not covered by any of the competitors.

In another preferred implementation the measurements comprise received signal strength, signal-to-interference-plus-noise ratio and/or signal throughput. Signal strength, also referred to as field strength, refers to a transmitter power output of a transmitting antenna as received by a reference antenna at a distance from the transmitting antenna. High-powered transmissions, such as those used in broadcasting, are expressed in dB-millivolts per meter (dBmV/m). For very low-power systems, such as mobile phones, signal strength is usually expressed in dB-microvolts per meter (dBµV/m) or in decibels above a reference level of one milliwatt (dBm). Signal-to-interference-plus-noise ratio, also known as signal-to-noise-plus-interference ratio, SNIR, is a quantity used to give theoretical upper bounds on channel capacity, or a rate of information transfer in wireless communication systems such as networks. Analogous to signal-noise-ratio used often in wired communications systems, the SINR is defined as the power of a certain signal of interest divided by the sum of the interference power, from all the other interfering signals, and the power of some background noise. Besides that, the measurements may comprise call set-up time, call success ratio, speech quality, user download speed, coverage for voice, coverage for data, coverage for data transmission technology, file up- and download speed, YouTube speed, data success ratio, web page download etc.

Other example embodiments of the invention will be described in the following with reference to the figure. It has to be noted that the figure are only provided for illustration of the general concept of the invention by examples not defining the scope of protection of the invention. The figure is not drawn to scale. Features shall not be considered to be essential for the present invention because they are depicted in the figure.

### BRIEF DESCRIPTION OF THE FIGURES

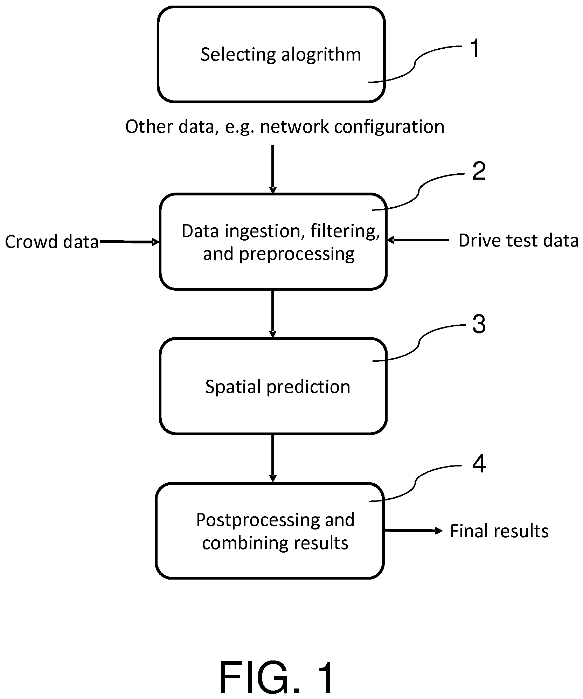

In the figures
- Fig. 1: an exemplary embodiment showing the computer implemented method for predicting geographical distribution of mobile communication network quality according to a preferred embodiment.

### DETAILED DESCRIPTION OF THE FIGURES

The invention will be described in the following with reference to an exemplary embodiment showing the computer implemented method for predicting geographical distribution of mobile communication network quality according to a preferred embodiment.

In a first step 1, a kriging propagation prediction algorithm comprising fixed rank kriging, regression kriging, cokriging and/or indicator kriging is selected based on mobile communication network configuration information and type and/or quantity of measurements of the mobile communication network quality of a geographical area of interest. Thereby regression kriging is selected based on the mobile communication network configuration information and if only one type of measurements such as only crowd data, drive-test data or mobile scanner data is available. Cokriging is selected as propagation prediction algorithm if multiple types of measurements are available, for example drive-test data and crowd sourced measurement data. Fixed rank kriging is advantageously selected for very large amount of measurement data, for example 10.000 measurements, and if only one type of measurements is available.

In a second step 2, measurements of the mobile communication network quality of a geographical area of interest are preprocessed, also depending on the selected kriging propagation prediction algorithm. Preprocessing means that the measurement data is first sanitized to remove measurements collected by malfunctioning mobile devices, or which are determined to be too imprecise for next processing steps. For example, GPS accuracy of the measurements is checked, and measurements with fake GPS readings are filtered out. The measurements comprise received signal strength and signal throughput, and derived, among others, from crowd data derived from applications installed on smartphones, from drive- and/or walk tests. Then the remaining measurement data is further reduced to select measurements that are relevant to the chosen use case and/or the areas of interest. The area of interest can be, for example, part of a town or a geographical area.

For example, to determine the outdoor coverage of a wireless telecommunications network such as a 4G network, measurements collected indoors or by passengers inside planes are removed. This is done by using statistical models, in case of crowd data, or metadata associated to the measurements for drive data. Finally, the remaining measurement data can be filtered to reduce measurement error, for example averaged to remove fast fading effects, or aggregated to obtain signal of interest for a respective prediction stage, for example. in case of Wi-Fi coverage estimation, a peak hold filter can be used to find received power from beacon frames in absence of ongoing data transmission.

In the next prediction step 3, a kriging propagation prediction algorithm is applied to the preprocessed measurements based on mobile communication network configuration information and/or propagation characteristics of the geographical area of interest for predicting the mobile communication network quality at locations within the geographical area of interest where measurements are not available

In particular, if network configuration information, for example base station locations, antenna configuration etc., or other known characteristics of the propagation environment such as terrain information, building locations, clutter etc. are known, a deterministic propagation model is first fit locally to the measurements of the geographical area of interest. Then the residuals of this model, for example remaining model errors, or the raw measurement data, in case no additional information was available, can be fed into a spatial prediction algorithm to "fill in the gaps", that is, to estimate mobile radio network conditions also at locations where direct measurements are not available, and also to deal with situations where contradicting measurements have been made at a single location.

The algorithms used for this purpose is a kriging propagation prediction algorithm, by using said mobile communication network configuration information and/or propagation characteristics of the geographical area of interest as input parameter for predicting the mobile communication network quality at locations within the geographical area of interest where measurements are not available.

In particular, the kriging propagation prediction algorithm comprises fixed rank kriging, regression kriging, cokriging and/or indicator kriging, depending on available information and type of output desired. Fixed rank kriging algorithm is advantageously used for network wide predictions with limited additional information. Regression kriging algorithm is beneficial for precise predictions in small regions. Cokriging algorithm is advantageously used when multiple sources of measurements with different characteristics are available, as is often the case for drive tests and crowd data being used simultaneously. Indicator kriging algorithm can be used for predicting probabilities, such as loss rates, call failure rates etc.

Said algorithms rely on a spatial correlation model that advantageously needs to be specified and/or estimated from the measurement data. Thereby, data from existing, earlier measurement campaigns can further be used to collect prior information that can be used to improve correlation model fits when only very few measurements are available. The desired prediction locations i.e. the areas of interest are tuned to the chosen use case. For example, higher resolution predictions can be made within urban areas where radio propagation is more unpredictable, and measurement data is abundant, while using lower resolution in low-population regions. Such way substantial savings in the needed computational costs can be achieved.

Fixed rank kriging relies on the specification of so-called basis functions. Significant computational savings and accuracy improvements are possible by adapting this specification to the measurement locations i.e. areas of interest from which data is available and using additional information on the propagation environment, for example land use data, clutter data, terrain roughness and elevation etc. Specific thresholds derived from measured performance of existing propagation models can be used to limit the predictions to locations in which the achieved accuracy is either comparable or better than existing models. This prevents misleading predictions in regions where little data is available, or the prediction environment is particularly complex.

In a last postprocessing step 4 the predicted mobile communication network quality for obtaining a mobile communication network signal strength characteristic of the area of interest is conducted. In particular, one or more sets of predictions derived by applying the selected kriging propagation algorithm are used to derive use case specific final results. In a simplest case, coverage predictions can be directly taken to obtain operator and radio access technology specific signal strength maps.

Furthermore, coverage holes can be identified by combining measurements from multiple radio access technologies for identifying geographic regions not served by a given for example 4G technology. Measurements from radio access networks that are not prioritized by the user equipment connection management can be used as evidence of a coverage hole of the preferred technology. The before described methodology can be extended to identify regions in which a given operator of a multiplicity of operators is at competitive disadvantage, for example does not cover a specific region with preferred networking technology whereas at least one competitor does, or has competitive advantage, for example covers a region with preferred technology not covered by any of the competitors.

Besides that, contiguous regions of given service quality can be identified, for finding a list of N largest contiguous regions where the service quality (in terms of received signal strength, signal-to-interference-plus-noise ratio, throughput or another chosen metric) is either below or above a chosen threshold. Optionally, a desired confidence level can be specified, resulting in only those geographical regions being returned whose size (or other structural characteristics) exceeds a chosen threshold at this confidence level. Further, network component failures, jamming, and other abnormal activities manifest themselves as geographical regions in which one or more metrics of interest behave substantially differently to the rest of the mobile communication network can be detected (Spatial outlier detection).

By comparing predictions for received signal strength and signal-to-interference-plus-noise ratio it is possible to identify geographical regions in which interference level as so-called interference hunting. Combined with identifying contiguous regions of given service quality as described before significant deviations can be identified and compared against network configuration data to infer whether interference is likely to arise from the mobile communication network itself, for example from regular intra-cell interference, or due to misconfiguration of cell frequencies. Finally, from outdoor coverage predictions statistical and machine learning model's coverage statistics can be used to derive coverage estimates for user equipment's that are in conditions not representative of the original measurement data. For example, indoor coverage or coverage under heavy foliage can be estimated this way from regular outdoor coverage predictions.

Depicted or described connections between components are generally to be understood to be functional connections. They can be implemented as direct links or as indirect links via several other components. The order of presented actions is not mandatory; alternative orders are possible. Actions can be implemented in different ways. They could be implemented in software using program instructions; or they could be implemented in hardware; or they could be implemented making use of a combination of hardware and software. It is to be understood that the described embodiments are examples only, which may be modified and/or supplemented in many ways within the scope of the claims. In particular, any feature described for a particular embodiment can be used by itself or in combination with other features in any other embodiment. Each feature that has been described for an embodiment of a particular category can also be used in an equivalent manner in an embodiment of any other category.

**REFERENCE NUMERALS**

| | |
|---|---|
| Selecting a kriging propagation algorithm | 1 |
| Preprocessing measurements | 2 |
| Applying the selected kriging propagation algorithm | 3 |
| Postprocessing the predicted mobile communication network quality | 4 |

## Claims

1. Computer implemented method for predicting geographical distribution of a mobile communication network quality, comprising the steps:
Selecting a kriging propagation prediction algorithm (1) selected from fixed rank kriging, regression kriging, cokriging and indicator kriging based on mobile communication network configuration information and type and/or quantity of measurements of the mobile communication network quality of a geographical area of interest;
Preprocessing measurements (2) of the mobile communication network quality of the geographical area of interest based on the selected kriging propagation prediction algorithm,
Applying the selected kriging propagation prediction algorithm (3) to the preprocessed measurements based on the mobile communication network configuration information and/or propagation characteristics of the geographical area of interest for predicting the mobile communication network quality at locations within the geographical area of interest where measurements are not available, and
Postprocessing the predicted mobile communication network quality (4) based on the selected kriging propagation prediction algorithm for obtaining a mobile communication network signal strength characteristic of the area of interest.

2. Method according to the previous claim, whereby fixed rank kriging is selected if larger amount of measurements and only one type of measurements selected from drive- or walk test measurement data, crowd data sourced from smartphones or mobile scanner data is available, regression kriging is selected based on the mobile communication network configuration information and if only one type of measurements is available, cokriging is selected if multiple type of measurements are available and indicator kriging is selected otherwise.

3. Method according to any of the previous claims, whereby the preprocessing comprises removing invalid measurements collected by malfunctioning mobile devices and/or comprising imprecise or incorrect GPS readings and/or collected inside buildings and/or inside planes, by using statistical models, resolving contradicting measurements at a single location and/or based on metadata associated to the measurements, and/or the measurements are averaged and/or aggregated.

4. Method according to any of the previous claims, whereby the mobile communication network configuration information comprises antenna patterns and/or base station configurations.

5. Method according to any of the previous claims, whereby propagation characteristics of the geographical area comprise base station locations, terrain information, land use data, clatter data, terrain roughness, elevation, terrain elevation and/or building locations.

6. Method according to any of the previous claims, whereby the measurements of the mobile communication network quality comprise data derived from a drive-test, a walk-test data and/or mobile device applications as crowd sourced data.

7. Method according to any of the previous claims, whereby the kriging propagation prediction algorithm determines a granularity of the predicted mobile communication network quality based on a type of the geographical area of interest.

8. Method according to any of the previous claims, whereby postprocessing comprises generating a network operator and/or radio access technology specific strength signal map.

9. Method according to any of the previous claims, whereby postprocessing comprises identifying coverage holes for combining measurements from multiple radio access technologies.

10. Method according to any of the previous claims, whereby postprocessing comprises identifying regions and/or communication quality of different mobile communication network operators.

11. Method according to any of the previous claims, whereby the measurements comprise received signal strength, signal-to-interference-plus-noise ratio and/or signal throughut.

## Patentansprüche

1. Computerimplementiertes Verfahren zum Vorhersagen einer geografischen Verteilung einer Mobilkommunikationsnetzqualität, mit den Schritten:
Auswählen eines Kriging-Ausbreitungsvorhersagealgorithmus (1), der ausgewählt ist aus Fixed-Rank-Kriging, Regression-Kriging, Co-Kriging und Indicator-Kriging, basierend auf Mobilkommunikationsnetzkonfigurationsinformation und der Art und/oder Anzahl an Messergebnissen der Mobilfunknetzqualität eines geografischen Gebiets von Interesse;
Vorverarbeiten von Messergebnissen (2) der Mobilkommunikationsnetzqualität des geografischen Gebiets von Interesse basierend auf dem ausgewählten Kriging-Ausbreitungsvorhersagealgorithmus;
Anwenden des ausgewählten Kriging-Ausbreitungsvorhersagealgorithmus (3) auf die vorverarbeiteten Messergebnisse basierend auf der Mobilkommunikationsnetzkonfigurationsinformation und/oder den Ausbreitungseigenschaften des geografischen Gebiets von Interesse zum Vorhersagen der Mobilkommunikationsnetzqualität an Orten innerhalb des geografischen Gebiets von Interesse, wo keine Messergebnisse verfügbar sind; und
Nachverarbeiten der vorhergesagten Mobilkommunikationsnetzqualität (4) basierend auf dem ausgewählten Kriging-Ausbreitungsvorhersagealgorithmus zum Erhalten einer für das Gebiet von Interesse charakteristischen Mobilkommunikationsnetzsignalstärke.

2. Verfahren nach dem vorhergehenden Anspruch, wobei Fixed-Rank-Kriging ausgewählt wird, wenn eine größere Anzahl an Messergebnissen und nur eine Art von Messergebnissen verfügbar ist, die ausgewählt sind aus Messdaten von Fahr- oder Gehtests, Smartphone-Crowdsourcing-Daten oder Daten von mobilen Scannern, Regression-Kriging basierend auf der Mobilkommunikationsnetzkonfigurationsinformation, und wenn nur eine Art von Messergebnissen verfügbar ist, ausgewählt wird, Co-Kriging ausgewählt wird, wenn mehrere Arten von Messergebnissen verfügbar sind, und andernfalls Indicator-Kriging ausgewählt wird.

3. Verfahren nach einem der vorhergehenden Ansprüche, wobei das Vorverarbeiten aufweist: Entfernen ungültiger Messergebnisse, die durch nicht richtig funktionierende Mobilgeräte erfasst werden und/oder ungenaue oder fehlerhafte GPS-Messwerte enthalten und/oder im Inneren von Gebäuden und/oder Flugzeugen erfasst wurden, unter Verwendung von statistischen Modellen, um widersprüchliche Messergebnisse an einem einzelnen Ort aufzulösen, und/oder basierend auf den Messergebnissen zugeordneten Metadaten, und/oder wobei die Messergebnisse gemittelt und/oder aggregiert werden.

4. Verfahren nach einem der vorhergehenden Ansprüche, wobei die Mobilkommunikationsnetzkonfigurationsinformation Antennenmuster und/oder Basisstationskonfigurationen enthält.

5. Verfahren nach einem der vorhergehenden Ansprüche, wobei die Ausbreitungseigenschaften des geografischen Gebiets Basisstationsstandorte, Geländeinformation, Landnutzungsdaten, Clatter-Daten, Geländerauheit, Höhen, Geländeerhöhungen und/oder Gebäudestandorte aufweisen.

6. Verfahren nach einem der vorhergehenden Ansprüche, wobei die Messergebnisse der Mobilkommunikationsnetzqualität Daten enthalten, die aus Fahrtestdaten, Gehtestdaten und/oder Mobilgeräteanwendungen als Crowdsourcing-Daten hergeleitet werden.

7. Verfahren nach einem der vorhergehenden Ansprüche, wobei der Kriging-Ausbreitungsvorhersagealgorithmus eine Granularität der vorhergesagten Mobilkommunikationsnetzqualität basierend auf einem Typ des geografischen Gebiets von Interesse bestimmt.

8. Verfahren nach einem der vorhergehenden Ansprüche, wobei das Nachverarbeiten das Erzeugen eines Netzbetreibers und/oder einer für eine Funkzugriffstechnik spezifischen Signalstärkekarte aufweist.

9. Verfahren nach einem der vorhergehenden Ansprüche, wobei das Nachverarbeiten das Identifizieren von Abdeckungslöchern zum Kombinieren von Messergebnissen von mehreren Funkzugangstechniken aufweist.

10. Verfahren nach einem der vorhergehenden Ansprüche, wobei das Nachverarbeiten das Identifizieren von Regionen und/oder der Kommunikationsqualität verschiedener Mobilkommunikationsnetzbetreiber aufweist.

11. Verfahren nach einem der vorhergehenden Ansprüche, wobei die Messergebnisse die empfangene Signalstärke, das Signal-zu-Interferenz-plus-Rausch-Verhältnis und/ oder den Signaldurchsatz aufweisen.

## Revendications

1. Procédé mis en œuvre par ordinateur pour prédire la distribution géographique d'une qualité de réseau de communication mobile, comprenant les étapes :
de sélection d'un algorithme de prédiction de propagation de krigeage (1) choisi parmi un krigeage à rang fixe, un krigeage de régression , un co-krigeage et un krigeage d'indicateur basé sur une information de configuration du réseau de communication mobile et le type et/ou la quantité de mesures de la qualité du réseau de communication mobile au niveau d'une zone géographique d'intérêt ;
de prétraitement de mesures (2) de la qualité du réseau de communication mobile de la zone géographique d'intérêt sur la base de l'algorithme de prédiction de la propagation de krigeage sélectionné,
d'application de l'algorithme de prédiction de la propagation de krigeage (3) sélectionné aux mesures prétraitées sur la base de l'information de configuration du réseau de communication mobile et/ou de caractéristiques de propagation de la zone géographique d'intérêt pour prédire la qualité du réseau de communication mobile à des endroits dans la zone géographique d'intérêt où des mesures ne sont pas disponibles, et
de post-traitement de la qualité du réseau de communication mobile (4) prédite sur la base d'un algorithme de prédiction de la propagation de krigeage sélectionné afin d'obtenir une caractéristique d'intensité de signal du réseau de communication mobile de la zone d'intérêt.

2. Procédé selon la revendication précédente, par lequel le krigeage à rang fixe est sélectionné si une quantité plus importante de mesures et uniquement un type de mesures sélectionnées à partir de données de mesures d'un test de conduite et de marche, de données de la foule ayant pour sources des Smartphones ou des données de scanner mobile, le krigeage de régression est sélectionné sur la base d'une information de configuration de réseau de communication mobile et si uniquement un type de mesures est disponible, le co-krigeage est sélectionné si de multiples types de mesures sont disponibles et le krigeage d'indicateur est sélectionné dans les autres cas.

3. Procédé selon l'une quelconque des revendications précédentes, par lequel le prétraitement comprend le retrait de mesures invalides collectées par des dispositifs mobiles en disfonctionnement et/ou comprenant des lectures de GPS imprécises ou incorrectes, et/ou collectées à l'intérieur de bâtiments et/ou de plans intérieurs, en utilisant des modèles statistiques, la résolution de mesures contradictoires à un seul endroit, et/ou sur la base de métadonnées associées aux mesures, et/ou les mesures sont moyennées et/ou agrégées.

4. Procédé selon l'une quelconque des revendications précédentes, par lequel l'information de configuration de réseau de communication mobile comprend des modèles d'antenne et/ou des configurations de station de base.

5. Procédé selon l'une quelconque des revendications précédentes, par lequel les caractéristiques de propagation de la zone géographique comprennent des emplacements de station de base, une information sur le terrain, une donnée d'utilisation du sol, des données de cliquetis, la rugosité du terrain, l'élévation, l'élévation du terrain et/ou les emplacements de bâtiments.

6. Procédé selon l'une quelconque des revendications précédentes, par lequel les mesures de la qualité du réseau de communication mobile comprennent des données dérivées d'un test de conduite, de données d'un test de marche et/ou d'applications de dispositifs mobiles servant de données ayant pour source la foule.

7. Procédé selon l'une quelconque des revendications précédentes, par lequel l'algorithme de prédiction de la propagation du krigeage détermine une granularité de la qualité du réseau de communication mobile prédite sur la base d'un type de la zone géographique d'intérêt.

8. Procédé selon l'une quelconque des revendications précédentes, par lequel le post-traitement comprend la génération d'un opérateur de réseau et/ou d'une carte de signal d'intensité spécifique d'une technologie d'accès radio.

9. Procédé selon l'une quelconque des revendications précédentes, par lequel le post-traitement comprend l'identification de trous de couverture pour combiner des mesures à partir de multiples technologies d'accès radio.

10. Procédé selon l'une quelconque des revendications précédentes, par lequel le post-traitement comprend l'identification de régions et/ou de la qualité de communication de différents opérateurs de réseau de communication mobile.

11. Procédé selon l'une quelconque des revendications précédentes, par lequel les mesures comprennent l'intensité du signal reçu, le ratio signal sur interférence plus bruit, et/ou le throughput de signal.
